Europäisches Patentamt

(19) European Patent Office

Office européen des brevets

(11) Publication number: **0 322 046 B1**

(12) # EUROPEAN PATENT SPECIFICATION

(45) Date of publication of patent specification: **11.05.94**  �['51] Int. Cl.⁵: **A01C 15/04**, A01C 7/10,
    A01M 7/00, B65G 53/66

(21) Application number: **88202906.9**

(22) Date of filing: **16.12.88**

(54) **An agricultural machine for distributing material.**

(30) Priority: **21.12.87 NL 8703087**
        **20.07.88 NL 8801834**

(43) Date of publication of application:
    **28.06.89 Bulletin 89/26**

(45) Publication of the grant of the patent:
    **11.05.94 Bulletin 94/19**

(84) Designated Contracting States:
    **AT BE DE ES FR GB NL SE**

(56) References cited:
    **EP-A- 308 154**
    **EP-A- 0 158 985**
    **WO-A-83/01850**
    **US-A- 3 912 121**
    **US-A- 3 936 904**

(73) Proprietor: **C. van der Lely N.V.**
    **Weverskade 10**
    **P.O. Box 26**
    **NL-3155 ZG Maasland(NL)**

(72) Inventor: **van den Berg, Karel**
    **31 Meulenbroek**
    **Bleskensgraaf(NL)**
    Inventor: **Ouwerkerk, Cornelis Gerardus**
    **19 Eikenlaan**
    **Rozenburg(NL)**

(74) Representative: **Mulder, Herman et al**
    **Octrooibureau Van der Lely N.V.**
    **Weverskade 10**
    **NL-3155 PD Maasland (NL)**

## Description

The invention concerns a pneumatic seed drill or a pneumatic fertilizer spreader for distributing material to be conveyed by means of an air flow via at least one conveyor duct from a supply position to a discharge position.

In a pneumatic seed drill, material, i.e. the seed, is conveyed via a plurality of tubes by means of flowing air prevailing therein from a distribution box to seed shares extending in rows into the soil.

A similar principle is also applied in pneumatic fertilizer spreaders, wherein fertilizer grains are conveyed to distributors via tubes by means of flowing air.

Problems will arise when a conveyor duct is clogged up completely or partly during operation. When, e.g. in the case of the said pneumatic seed drill, due to the blockage of one or more seed shares there will be no, or hardly any, air flow in one or more of the tubes, the conveyance of seed will, of course, be stagnated as well. Mostly not until after the sowing operation has been completed, the driver of the tractor hauling the machine will be able to establish that part of the field has not been sown. This will entail loss of crop, unless the driver will discover the fault at a later moment but still during operation; in that case the empty furrows will have to be sown as yet at the expense of considerable loss of time, while the adjoining, already sown, furrows will have to be spared.

On the other hand, the non-sowing of some rows is often done deliberately with the object of creating tracks for the tractor to drive on while hauling a fertilizer spreader or a spraying machine once the sowing operation has been completed.

It is an object of the invention to make such provisions that, during operation, the tractor driver will be able to establish at any desired moment whether a conveyor duct is active or not.

According to the invention, in the air flow there is arranged a sensor device for establishing the degree of flow thereof.

When in the air flow of each conveyor duct there is arranged a sensor device and the signals produced thereby are rendered visible or audible near the driver's seat, it will be possible for the driver to establish at any desired moment whether all the conveyor ducts are active or not. If not, it will be possible to establish which one is inactive, so that the driver will be able to take immediate action.

It will be possible for a system according to the invention to be adjusted in such a manner that not only a completely inactive conveyor duct is indicated, but also a conveyor duct having a certain reduced degree of air flow.

For pneumatic seed drills or pneumatic fertilizer spreaders it is possible to use sensors of the type as known from EP-A-158985, US-A-3912121 or WO-A-8301850; however, in these documents the sensors respond to the presence, the absence and/or a varying number of separate particles to be distributed. The application of such sensors is less accurate than the application of flow sensors according to the invention because e.g. in the case, the output opening for material to be distributed is blocked, the sensors in the above documents still can indicate the presence of material supplied to said output opening.

For a better understanding of the invention and to show how the same may be carried into effect, reference will now be made, by way of example, to the accompanying drawings, wherein:

Figure 1 is a side view of an example of an application of the invention in a pneumatic seed drill;

Figure 2 is a rear view of the machine shown in Figure 1;

Figure 3 is an axial cross-sectional view of a conveyor duct in the position of III in Figure 1 and shows the arrangement of a sensor device;

Figure 4 is also an axial cross-sectional view of a conveyor duct in the position of III in Figure 1 and concerns a second embodiment of an arrangement of a sensor device;

Figure 5 shows a scheme comprising a plurality of sensor devices for establishing the degree of air flow in the respective conveyor ducts by means of an operating device;

Figure 6 shows a scheme comprising a plurality of sensor devices and a microprocessor for establising the degree of air flow in the respective conveyor ducts, as well as an operating device for operating the agricultural machine according to the invention under microprocessor control;

Figure 7 shows patterns of drive tracks at different ratios between the working width of a pneumatic seed drill and that of a spreader or spraying machine to be active on the same soil later on;

Figure 8 shows an example of a pneumatic fertilizer spreader wherein the invention can be employed.

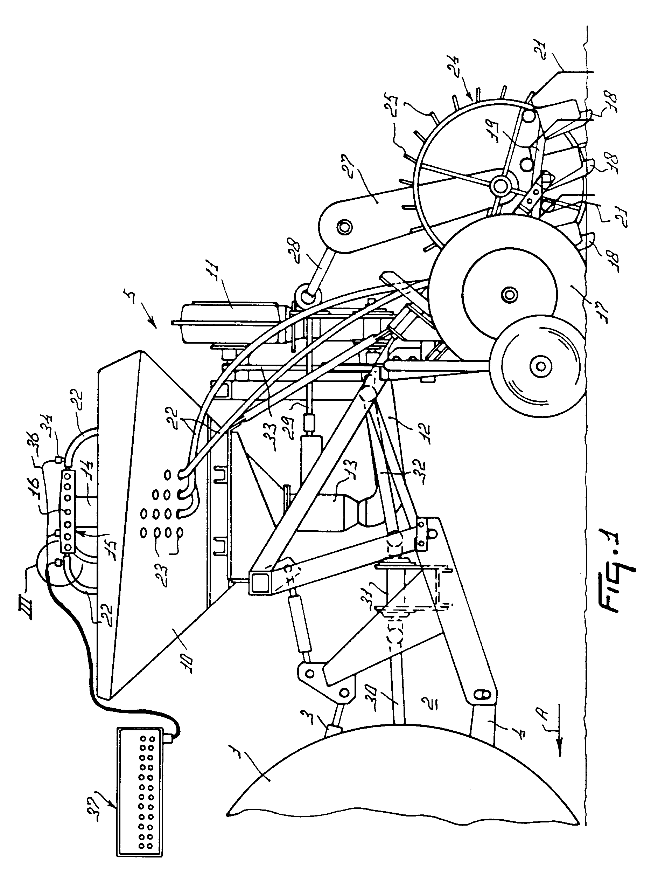

Figure 1 shows the rear end of a tractor 1 which is provided with a three-point lifting hitch 2 comprising an upper lifting arm 3 and lower lifting arms 4, to which arms there is attached a pneumatic seed drill 5.

The seed drill 5 includes a hopper 10 to contain the seed material. During operation, by using a fan 11, there is blown air via a tube 12 to a doser device 13, by means of which doser device the seed material originating from the hopper 10 is mixed in quantities that are adapted to the rate of travel of the machine with the air coming from the tube 12. This air/seed mixture is conveyed to a distribution member 15 via a tube 14. The doser device 13 is mounted against the bottom side of the downwardly tapering hopper 10. The tube 14 extends from the doser device 13 approximately in the vertical direction upwardly through the hopper 10 to beyond the upper edge thereof. The distribution member 15 has the shape of a flat, round box, the centre line of which approximately coincides with that of the tube 14 while its diameter is a few times larger than that of the tube 14. Due to the symmetry of the tube 14 and the distribution member 15 relative to their common centre line, the seed material mixed with the air flowing upwardly through the tube 14 is distributed uniformly along the inner circumference of the upwardly directed, approximately cylindrical outer wall of the distribution member 15. To the outer side of this wall there are fitted a large number of short outflow pipes 16, which outflow pipes are directed approximately radially relative to the said cylindrical wall of the distribution member 15.

During operation, the seed drill 5 is supported not only by the lifting hitch 2 but also by ground wheels 17, which ground wheels are arranged at the outer side of the machine and, seen in the side view of Figure 1 and taken relative to the direction of operative travel A, are located behind the hopper 10.

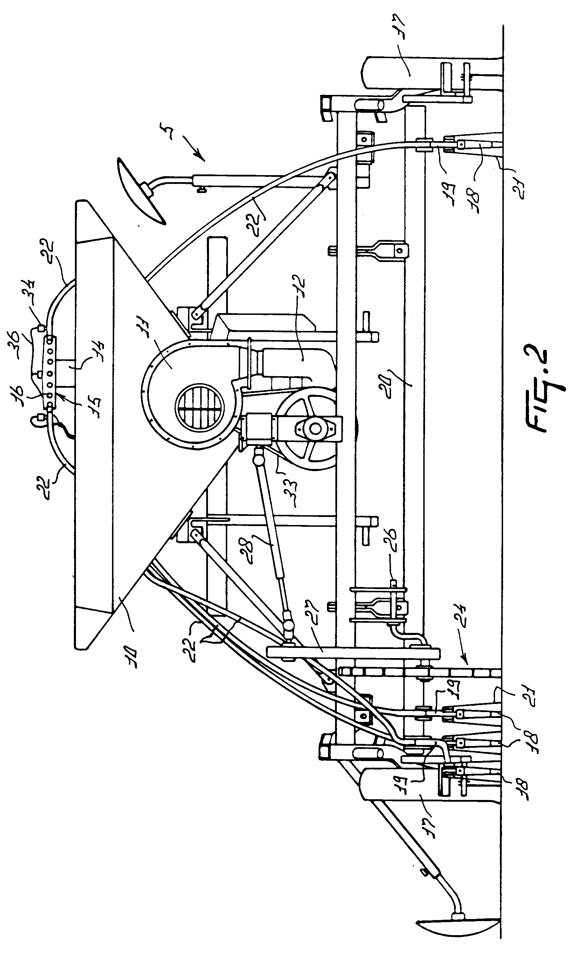

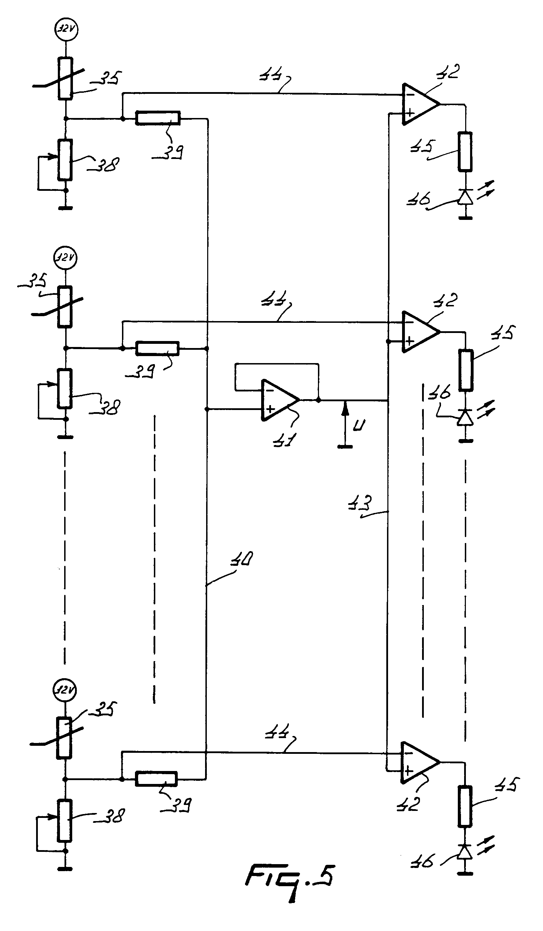

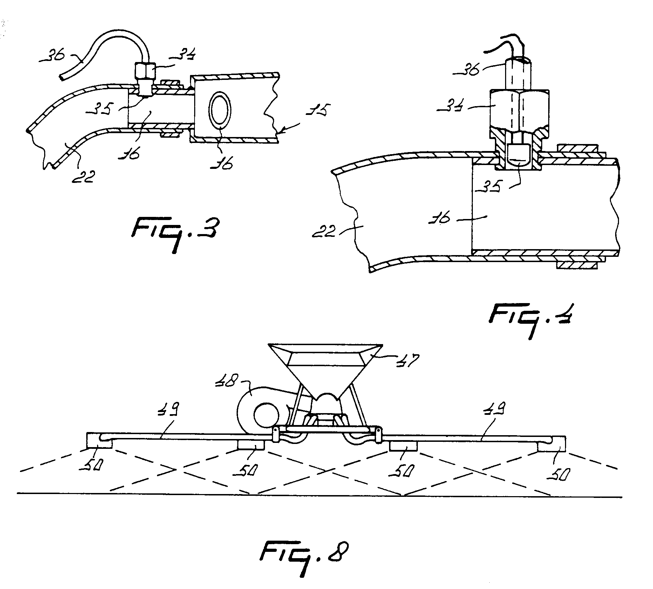

Seen in the rear view of Figure 2, the working width of the machine extends approximately over the distance between the inner faces of the ground wheels 17. Across this working width there is arranged a large number of, e.g. twenty-four, seed shares 18 in one or more rows extending transversely to the direction of operative travel A (Figure 2). The seed shares are arranged at equal interspaces and are connected to seed pipes 19, which seed pipes extend from the seed shares in the forward direction. Near their front ends, the seed pipes 19 are connected pivotably about horizontal pivot axes directed transversely to the direction of operative travel A to a cross-beam 20 of the machine. During operation, each seed share 18 extends by means of its lower end into the soil and, during movement of the machine, makes a furrow to receive the seed leaving an aperture arranged at the lower end of the seed share. On either side of each seed share and, relative to the direction of operative travel A, therebehind there are arranged resilient brushes 21 for covering up the seeds introduced into the soil.

The number of outflow pipes 16 of the distribution member 15 is the same as that of the seed shares 18. Onto each outflow pipe 16 there is pushed a flexible tube 22 made of synthetic resin material, which tube 22, taken from the associated outflow pipe 16, bends downwardly into the hopper, subsequently emerges therefrom through one of a plurality of apertures 23 arranged in the hopper wall and finally is passed in a downward and rearward direction. The rear end of each tube 22 (conveyor duct) is pushed onto the front end of the seed pipe 19 of one of the seed shares.

The dosing of the seed as effected by the doser device 13 is controlled by means of a stepper wheel 24, which stepper wheel comprises a steel rim provided with a large number of outwardly extending, rigid teeth 25. The axle of the stepper wheel 24 is connected freely pivotably by means of a horizontal pivot pin 26 extending transversely to the direction of operative travel A to the crossbeam 20 of the machine, so that the stepper wheel 24 is freely movable relative to a further portion of the machine in the upward direction. A hub of the stepper wheel 24 is in driving connection with a chain transmission accommodated in a housing 27, which chain transmission together with the stepper wheel 24 as a whole is freely pivotable about the pivot pin 26 relative to a further portion of the machine. Near the upper end of the chain transmission housing 27 there is provided an outgoing shaft which is in driving connection with the doser device 13 by means of intermediate shafts 28 and 29 including universal joints.

By means of its own weight and that of the chain transmission 27, the stepper wheel 24 bears on the soil, whereby the teeth 25 penetrate thereinto. In this manner, the stepper wheel 24 is driven such that the circumferential velocity of its rim is equal to the rate of travel of the machine. By means of the above-described transmission, the rotational speed of the stepper wheel 24 is transferred in a specific ratio to a doser roller of the device 13, which roller mixes the seed falling from the hopper 10 with the air current supplied through the tube 12 in proportion to the rate of travel. Seen in Figure 2, the stepper wheel 24 is arranged between two adjacent seed shares 18.

The fan 11 is driven by means of an intermediate shaft 32 connected to the power take-off shaft 30 of the tractor, which intermediate shaft is bearing-supported in a bearing 31 of the machine. To the bearing 31 there is connected the intermediate shaft 32 which drives the fan 11 via a belt transmission 33.

During operation, by means of the fan 11 there is passed an air flow through the tube 12 to the doser device 13, where the air is mixed with the material (seeds). The resultant air/material mixture is conveyed to the distribution member 15 via the tube 14. Inside the distribution member 15, the mixture is distributed approximately uniformly over a plurality of conveyor ducts (tubes 22) to the discharge positions (seed shares 18). The air velocity inside the conveyor ducts 18, 19, 22 amounts to a value in the order of magnitude of 10 m/sec.

The machine as described in the foregoing with reference to Figures 1 and 2 is a known per se one.

Despite known measures taken to prevent same, it may happen that one or more of the seed shares is/are clogged up e.g. by the intrusion of soil particles. This means that one or more rows is/are not sown or only in part, which entails loss of crop due to openings in the later crop growth. Such openings may extend over a considerable part of the field, because the tractor driver, unaware of the fault, will not be able to establish same during operation or (by accident) only afterwards. In case it will have to be established whether the seed has been sown in the desired manner, then the sown furrows will have to be opened at regular interspaces so as to be able to check whether they do contain seed material. This checking procedure will be extremely time-consuming, particularly because in doing so a destruction of the adjoining, sown rows will have to be avoided.

The invention is based on the idea not of checking the conveyance, or the lack thereof, of the material (the seed) itself but of establishing the degree of flow of air.

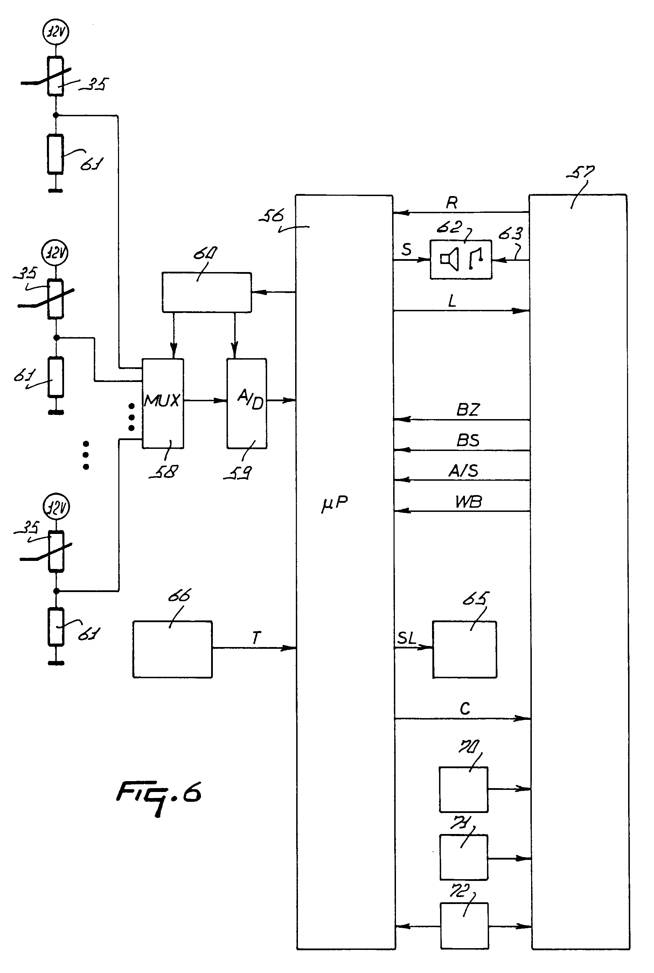

As is apparent from Figure 3, into each outflow pipe 16 there is screwed a holder 34 in such a manner that an end face thereof exactly reaches to into the space confined by the outflow pipe 16. This part of the holder is provided with a recess accommodating a sensor 35 in the form of a thermistor (PTC or NTC-resistor). In the embodiment of Figure 3, the sensor 35 is arranged such that part thereof projects beyond its holder and, consequently, is located in the air current flowing from the distribution member 15. The sensor 35 is attached inside the holder 34 and has two electrical connections which are connected to a processing and display device 37 (Figure 1) via a cable 36.

Figure 4 shows a slightly differing arrangement wherein the sensor 35, which, like in Figure 3, is attached in the recess of the holder 34 ending into the outflow pipe 16, is located completely inside the cylindrical part of the holder 34 screwed into the outflow pipe 16, so that it is hardly contacted by the passing air/material mixture, thereby preventing same form being subjected to serious wear in the long run. Due to their mass, the material particles will pass the holder 34 without entering into the cavity surrounding the sensor 35; however, the air carrying along the material will whirl inside the said cavity around the sensor 35, as a result of which a sufficient heat transfer will take place between the air and the sensor 35 so as to effect a proper action of the latter.

In the embodiment shown in Figures 3 and 4, the sensor 35 is arranged near the distribution member 15 but it is equally well possible to have same arranged near the seed pipes 19, near the seed shares 18 or somewhere else inside the conveyor duct.

Each of the conveyor ducts 18, 19, 22 is provided with a sensor 35 in either of the above-described ways.

Figure 5 shows a possible electronic scheme which, as will be set out in further detail hereinafter, can be accommodated for the greater part inside the processing and operating device 37. The sensor in the form of a thermistor fitted in each conveyor duct 18, 19, 22 is indicated in this scheme by the reference numeral 35. In Figure 5 there are shown the sensor 35 of an outermost seed share 18, that of the next adjoining seed share 18 and that of the other outermost seed share 18; the remaining interjacent sensors 35 (twenty-one in case a total number of twenty-four seed shares is employed) are connected in an analogous manner and are indicated roughly by means of interrupted lines. Each sensor 35, which can be fed directly by the voltage of the battery of the tractor 1, is arranged in series with a resistor 38 which limits the current through the associated sensor 35 and is connected to a zero potential (e.g. the frame of the tractor 11). The sensor voltage value, which in the present embodiment is the voltage between the sensors 35 and the associated resistors 38, is collected via resistors 39. These voltages for all the sensors are connected in parallel to a common connection 40. All the resistors 39 possess the same value. The connection 40 is connected to the non-inverting input of an operational amplifier 41. Such an amplifier is indicated in the usual manner by "opamp" in what follows. The output of the opamp 41 is short-circuited with the inverting input thereof. In this manner, the opamp 41 constitutes a high-resistance matching circuit for the preceding circuit.

The output voltage of the opamp 41 relative to the zero potential has a magnitude which essentially is a measure for the average of all the voltages between the sensors 35 and the associated resistors 38. This average voltage is indicated in Figure 5 by the capital U.

The circuit behind the opamp 41 comprises a number of opamps 42 which is the same as that of the sensors 35, i.e. twenty-four in the embodiment. The output voltage of the opamp 41 is connected to the non-inverting inputs of the opamps 42 by means of a connection 43. The voltage between each sensor 35 and the associated resistor 38 is connected to the inverting input of one of the opamps 42 by means of a connection 44. The output of each opamp 42 is connected via a current limiting resistor 45 to a LED 46 which has its other side connected to a zero potential.

When, e.g. due to the intrusion of soil into a seed share, the conveyance of seed material and air is stagnated completely or partly, then the cooling of the thermistor as effected by the air will be influenced accordingly as a result of the decreased air flow velocity, so that the temperature of the contemplated thermistor 35 will rise because of the current still flowing therethrough. Starting from the assumption that the resistance will increase at a rising temperature (the reverse being conceivable and practicable as well), the voltage between the resistors 35 and 38 relative to the zero potential will decrease. Due to the comparatively large number of measured sensors 35 involved in establishing at the output of the opamp 41 the average voltage of all the voltages occurring between the resistors 35 and 38, this average voltage U will hardly be changed in magnitude when one of the sensors is not cooled or to a lesser extent only. This average voltage U constitutes the virtual reference potential of the opamps 42. The circuit around each opamp 42 has not been elaborated upon in further detail in Figure 5, because these opamps may constitute part of a normal amplifier circuit but may also be designed as part of a Schmitt trigger circuit. The decreasing voltage between the contemplated sensor 35 and associated resistor 38 connected to the inverting input of the corresponding opamp 42 causes an increased voltage at the output of this associated opamp 42, as a result of which the LED 46 is lighted. The other LEDs are not lighted, so that, if the LEDs 46 arranged on the front plate of the display device 37 are numbered, the driver can perceive a complete or partial blocking of one (or more) conveyor duct(s) by the lighting of one (or more) LED(s) and also read which conveyor duct(s) is/are blocked, which will allow him to take immediate action.

The circuit can be fed directly from the battery of the tractor. True, the slightly varying battery voltage causes, during operation, an equally varying voltage between a sensor 35 and the associated resistor 38, but the average voltage at the output of the opamp 41 varies to the same extent, so that the result will not be influenced. Of course, it is also possible to employ a stabilized feeding voltage.

With respect to the elements shown in Figure 5 it should be noted that only the sensors 35 are arranged in the conveyor ducts 18, 19 and 22 (e.g. as shown in Figure 3 or 4), all the other parts of the circuit can be accommodated inside the processing and operating device 37. This device 37 is connected by means of a cable to the machine (in this case: the seed drill as shown in Figures 1 and 2) and belongs thereto. Due to the flexible connection between the device 37 and the machine, it is possible to arrange the device 37, during operation, inside the cab of the tractor 1 near the driver's seat and in the view of the driver.

With respect to the circuit shown in Figure 5 it should furthermore be noted that the resistors 38 may be designed as adjustable resistors in the form of potentiometers. By means thereof it is possible to achieve in the first place that the voltage level in one or more of the connections 44 can be adapted to the air flow velocity occurring in the relevant conveyor duct during normal operation; for the resistance in the various conveyor ducts may differ in that e.g. some ducts are longer than others. Secondly, by means of the potentiometers 38 it is possible to achieve that the voltage level in all the connections 44 can be adapted in such a manner that one or more indicator means (LED 46) is/are already lighted when one or more of the conveyor duct(s) is/are blocked only partly, i.e. when the flow velocity of the air is reduced to some extent. In this manner it is possible for the driver already to take action before a complete blocking has occurred, in which latter case the flow velocity would have been reduced to zero.

Of course, it is also possible to combine each of the indicator means 46 shown in Figure 5 with an audio-signal or to replace same thereby.

Figure 6 shows a different electronic circuit including a microprocessor 56 and an operating panel 57. With the exception of the sensors, this circuit, too, can be accommodated again inside the processing and operating device 37. The sensor in the form of a thermistor fitted in each conveyor duct 18, 19, 22 is indicated in this circuit by the reference numeral 35 again. Each sensor 35, which again can be fed directly by the voltage of the battery of the tractor 1, here too, is arranged in series with a resistor 61 which limits the current through the associated sensor 35 and is connected to a zero potential (e.g. the frame of the tractor 1). The sensor voltage values derived from these series connections are supplied via a multiplexer 58 and an analog/digital converter 59 connected hereto to a microprocessor 56. The multiplexer 58 and the analog/digital converter 59 are controlled by a time control unit 60, by means of which the sensor voltage values of the various series connections are passed in a specific time sequence and digitized. In this manner, the sensor voltage values are supplied to the microprocessor 56 in a specific frequency. If so desired, this frequency can be adjusted by the microprocessor by programming.

The microprocessor operates as follows: In response to a reset control signal R given by the operator to the microprocessor via a relevant reset switch on the operating panel 57, the consecutive voltage values $V_1, V_2,..., V_n$ (wherein n represents

the number of sensors and hence the number of conveyor ducts, provided at least each conveyor duct comprises only one sensor) given by the sensors 35 are read in the microprocessor. From the first series of read-in values $V_{io}$ there is determined an average voltage value $\overline{V}_o$ . Subsequently, a scale factor fi is established for each sensor in accordance with the relation $f_i = \overline{V}_o/V_{io}$ , which scale factors are stored in the memory of the microprocessor 56. A calibration of the sensors as effected in the embodiment shown in Figure 5 by means of the potentiometers 38 is rendered superfluous by these scale factors. When subsequently other sensor voltage values Vi are read, these are multiplied by the associated scale factors present in the memory, after which from the resultant new product values fiVi a new average voltage value $\overline{V}$ is determined. As long as the last read, individual sensor voltage values, multiplied by the associated scale values, do not or hardly differ from the thus last determined average value, no action will be taken. When, e.g. due to a change in the outside temperature or to an instability in the battery voltage, all the read sensor voltage values Vi of the sensors have risen by approximately the same percentage relative to the previously read values, then the individual product values fiVi will not or hardly differ from the average value $\overline{V}$ as determined from the said previous values.

When one of the conveyor ducts is blocked, the temperature therein will rise and, the sensor being an NTC-resistor, the sensor voltage value obtained thereby will increase in magnitude. When it is the conveyor duct j that is blocked, then there will be supplied to the microprocessor the following voltage values: $V_1$, $V_2$,..., $V_j + \Delta V_j$,..., $V_n$ , wherein $\Delta V_j$ represents the voltage increase due to the blocking. Subsequently, the product values $f_1V_1, f_2V_2,..., f_j(V_j + \Delta V_j),..., f_nV_n$ are compared separately with the average value $\overline{V}$ as obtained from these product values. Only to the product value $f_j(V_j + \Delta V_j)$ applies that $f_j(V_j + \Delta V_j) - \overline{V} > d$ , wherein d represents a threshold value as established in the microprocessor, while the other product values do not satisfy this inequality. When the said inequality occurs, the microprocessor issues a signal S, by means of which a sound generator 62 is activated, as well as a signal L, by means of which the blocked conveyor duct is indicated by indicator lights or LEDs on the operating panel 57 or, in case the said inequality has been established for more values of j, which conveyor ducts are blocked. Instead of a series of indicator lights or LEDs, it is also possible to employ on the operating panel 57 a display whereon e.g. is displayed which conveyor duct(s) is/are blocked and , given cyclically, the individual number(s) of the blocked conveyor duct(s). Via a relevant switch on the operating panel 57 and via the line 63, the operator will then switch off the sound generator 62 and clear the blocked conveyor duct(s). When thereafter again a new series of sensor voltage values Vi is read, for all the individual product values fiVi will apply again that they will not or hardly differ from the average value $\overline{V}$ as determined therefrom, so that the operator will be able to resume his activities with the agricultural machine.

Besides by means of contact with the soil, the conveyor ducts can also be blocked by changing the distribution member 15; it is also possible to close some conveyor ducts by means of e.g. magnetic valves with the object of creating tracks for the tractor to drive on when carrying out spreading or spraying operations afterwards. Therefore, in these cases a number of conveyor ducts is intervened with by the operator in such a manner that with respect to the sensors there is created a situation which is equal to a blocking.

If e.g. the distance between the rows of sown material should be doubled, the conveyor ducts are closed alternately by using a different distribution member 15. When after such a distribution member change no reset control signal is given , the original scale factors fi remain present in the microprocessor memory. The read sensor voltage values are then raised alternately by a specific value due to the blocking of the relevant conveyor ducts; these values can be indicated by $V_1, V_2 + \Delta V_2, V_3, V_4, + \Delta V_4,..., V_n + \Delta V_n$ , wherein n represents an even number. The individual product values $f_1V_1, f_2(V_2 + \Delta V_2), f_3V_3,..., f_n(V_n + \Delta V_n)$ are then compared with the average value $\overline{V}$ as determined thereform. To half of these product values, i.e. the product values $f_{2i}(V_{2i} + \Delta V_{2i})$ , will apply that $f_{2i}(V_{2i} + \Delta V_{2i}) - \overline{V} > d$ , while the other product values, i.e. $f_{2i-1}(V_{2i-1} + \Delta V_{2i-1})$ , do not satisfy this inequality. This implies that half of the indicator lights or LEDs on the operating panel 57 will be lighted or that half of the numbers of the conveyor ducts will appear cyclically on the display, which is a less desirable situation for the operator. When after the distribution member change first the reset control signal R is given by the operator, there will first be determined new scale factors which are tuned to the fact that e.g. half of the conveyor ducts are closed. In the instant situation, these scale factors will alternately differ relatively widely. When thereafter there are read in new sensor voltage values Vi , which also will alternately differ widely, then the product values fiVi will nevertheless not or hardly differ from the average value derived therefrom, unless, of course, one or more of the conveyor ducts cleared by the distribution member has/have become blocked yet. When subsequently the original distribution member is mounted again and no reset control signal R is given, whereby the relatively widely differing scale factors remain present in the memory, the relatively slightly differing sensor voltage values will lead to product values, half of which in this case again will rise above the threshold $\underline{d}$ on the average value $\overline{V}$ , so that half of the indicator lights or LEDs will be lighted. Also here, this situation can be prevented again after the change of the distribution member by giving a reset control signal R, as a result of which there are determined scale factors which are tuned to the new distribution system and are registered in the memory of the microprocessor.

As has already been stated in the foregoing, some of the conveyor ducts in a seed drill can be blocked by the operator with the object of creating tracks for the tractor to drive on when carrying out spreading or spraying operations afterwards.

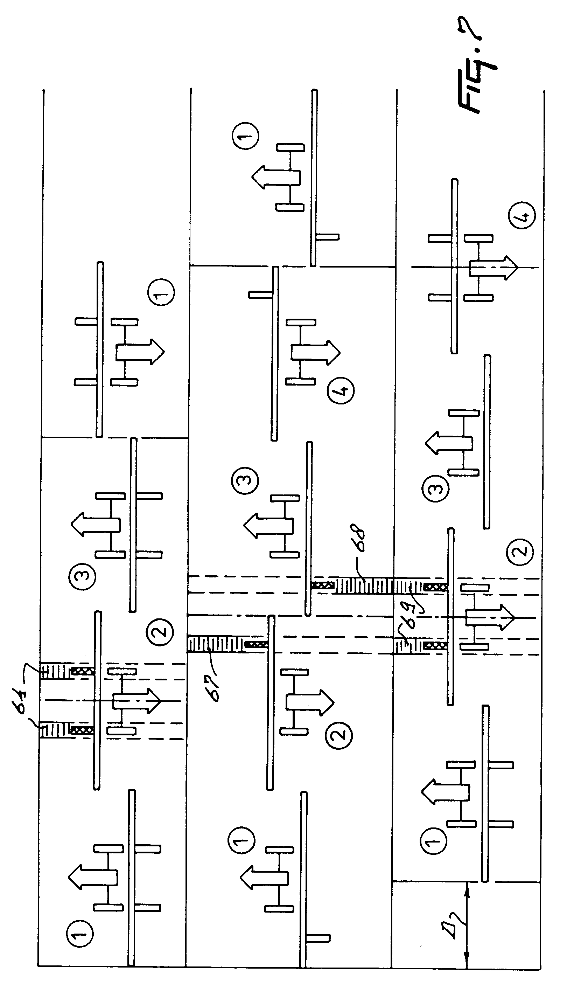

Via the operating panel, the working width BZ of the seed drill as well as the working width BS of the spreading or spraying machine can be introduced by the operator into the microprocessor, wherein then the rhythm BS/BZ of the seed drill is determined. This ratio indicates the number of runs to be made by the seed drill to cover one single run of the spreading or spraying machine. For example, if the working width of the spreading or spraying machine is 9 metres and that of the seed drill 3 metres, then the so-called rhythm is equal to 3, so that the seed drill has to make three runs to the one of the spreading or spraying machine; preferably, the working width of the spreading or spraying machine should be tuned to a complete number of times that of the seed drill. If the working width of the spreading or spraying machine is 12 metres and that of the seed drill again 3 metres, then the said rhythm is equal to 4. Both situations have been shown in Figure 7.

In Figure 7, the upper row of the diagrams shows how, the rhythm being 3, three runs have to be made by the seed drill in order to sow material over a width of 9 metres, which width will be covered in one single run by the spreading or spraying machine afterwards. During the second run, specific conveyor ducts in the seed drill have to be closed in order that tracks are created for the spreading or spraying machine to be driven on afterwards. These tracks are indicated by the reference numeral 64. Depending on the wheel width of the spreading or spraying machine, there have to be closed e.g. one or two adjacent conveyor ducts for each track to be formed. Consequently, for conventional wheel widths there have to be present in the seed drill two or four valves to close specific conveyor ducts during a specific run, in this case the second one, of an operating cycle for sowing the strip of soil later to be covered by the spreading or spraying machine. To that end, magnetic valves 65 (Figure 6) are arranged in specific outflow pipes 16 of the distribution member 15 of the seed drill, which valves are controlled from the microprocessor. In this connection, the number of runs made by the seed drill within each operating cycle should be counted in the microprocessor. For this purpose, use can be made of foldable markers 66 (Figure 6) arranged at both sides of the seed drill, one of which markers can give a signal T to the microprocessor each time when a relevant run has been completed. In the situation of the upper row of diagrams in Figure 7 having a rhythm of 3, after one run has been completed, the microprocessor will give a control signal SL to the magnetic valves 65, thereby closing same. After, in this case, the second run has been completed, the microprocessor can open the magnetic valves again by means of a similar control signal. Therefore, in this situation the operator need only introduce the working widths of the agricultural machines to be employed or, if either of the two is a fixed fact to him, the rhythm only.

The second and third rows of diagrams in Figure 7 show how, the rhythm being 4, four runs have to be made by the seed drill in order to sow material over a width of 12 metres, which width will be covered in one single run by the spreading or spraying machine afterwards. In the second row of the diagrams, the tracks 67 and 68 should be created during the second and third runs of the operating cycle of the seed drill. In the third row of the diagrams, the tracks 69 should be created during the second run of the operating cycle of the seed drill. In the case of the rhythm being even, in general the situation will arise that the operator will have to choose which one of the two methods (shown in the second and third rows of diagrams) he wishes to follow. Via a relevant switch present on the operating panel 57, this choice can be made known by the operator to the microprocessor by means of a signal A/S. When the operator chooses the method shown in the second row of diagrams, then, in dependence on the working width, it will suffice to use one or two valves 65, i.e. half the number of valves needed for creating tracks according to the method as shown in the first or third row of the diagrams. However, in this case the operator should drive more accurately in order to be able to lay the tracks 67 and 68 at the correct interspace. Here again, the control of the valves 65 is effected in the same manner as was described with reference to the method according to the first row of diagrams. It should be noted that in the method as shown in the last row of diagrams a first strip D is left uncovered by both the seed drill and the spreading or spraying machine, which are adjusted to the further working width required. In case it would not be certain, in connection with an unknown wheel width of the spreading or spraying machine to be used afterwards, whether e.g. one or two conveyor ducts, or one pair or two pairs thereof, will have to be closed during sowing, then there may be present yet on the operating panel 57 switching means for adjusting the number of conveyor ducts to be closed as well as their individual numbers, which data may be passed to the microprocessor 56 via a line WB. In addition, there may be present on the operating panel 57 indicator means for indicating the number of runs made by the seed drill within each operating cycle, so that the operator can check during which run or runs the valves required for creating the tracks have to be closed, as well as for indicating the individual numbers of the closed conveyor ducts. For this purpose, indicator signals C are passed from the microprocessor to the operating panel.

In addition, the seed drill may be provided with various sensors, i.e. a sensor 70 to indicate that the supply of seed material in the hopper 10 has fallen below a certain value, a sensor 71 to indicate that, during driving, the stepper wheel 24 controlling the doser device 13 is in motion, and a sensor 72 to indicate that the device seeing to the constancy of the movement of the fluid, such as the fan 11, is active. By means of these sensors and via the indicator means arranged on the operating panel 57, the operator can be warned that the supply in the hopper 10 is too low, that the doser device 13 is not functioning properly or that the fan 11 has become inactive. This last fact can also be passed to the microprocessor, since this situation can be equated to one wherein all the conveyor ducts are blocked, so that confusion will arise in a subsequent situation wherein one or more of the conveyor ducts actually has/have become blocked.

Figure 8 shows a fertilizer spreader comprising a hopper 47, a fan 48 and a distribution member (not shown) for the material (the fertilizer), which latter member doses the quantity of fertilizer to be delivered per unit of time in dependence on the rate of travel. These dosed quantities of fertilizer are blown in a known per se manner by means of air currents generated by the fan into the distribution pipes 49, which pipes 49 are arranged symmetrically at either side of the machine. In the case of the embodiment shown, each distribution pipe 49 comprises two conveyor ducts, each of which ends in a spreader member 50. The spreader members 50 spread the material over the total working width of the machine. In a manner analogous to that of the above-described embodiment, it is possible to arrange inside the said conveyor ducts sensors 35, by means of which a complete or partial blocking of the conveyor duct can be made known to the tractor driver.

Finally, it should be noted that the invention can also be applied to embodiments wherein only one sensor is employed. For example, when it is desirable to be able to establish whether or not the central supply of material and air in the tube 14 is stagnated (e.g. in the case of a defective belt transmission outside the view of the driver), it is possible to arrange inside the tube 14 one sensor which together with the associated resistor 38 is connected to a Schmitt trigger operating an indicator means in the form of a LED or buzzer. Such an application is also possible in the case of a machine having only one conveyor duct, exemplary of which is a liquid manure tank wherein the indicator means is capable of indicating whether the tank has been emptied completely or almost completely.

From the above it follows that, according to the invention, it is not the conveyance in the desired manner of the material itself, or the lack of it, that is established, but that of the air conveying the material, which air lends itself considerably better to the establishment of currents than the material itself.

## Claims

1. Pneumatic seed drill or pneumatic fertilizer spreader for distributing material to be conveyed by means of an air flow via at least one conveyor duct from a supply position to a discharge position, characterized in that in the air flow there is arranged at least one sensor (35) for establishing the degree of flow thereof.

2. Pneumatic seed drill or pneumatic fertilizer spreader as claimed in claim 1, characterized in that inside at least one conveyor duct (22) there is arranged a sensor (35).

3. Pneumatic seed drill or pneumatic fertilizer spreader as claimed in claim 1 or 2, characterized in that the sensor (35) is fitted in a holder (34) arranged in the conveyor duct wall in such a manner that a heat transfer can take place between the sensor (35) and the air flow.

4. Pneumatic seed drill or pneumatic fertilizer spreader as claimed in claim 3, characterized in that the sensor (35) extends at least partly to beyond the holder (34) into the conveyor duct (22).

5. Pneumatic seed drill or pneumatic fertilizer spreader as claimed in claim 3, characterized in that the sensor (35) is located within a cavity which is partly confined by the holder (34) and ends into the conveyor duct.

6. Pneumatic seed drill or pneumatic fertilizer spreader as claimed in any one of the preceding claims, characterized in that the sensor (35) comprises a thermistor (PTC- or NTC-resistor).

7. Pneumatic seed drill or pneumatic fertilizer spreader as claimed in claim 6, characterized in that a sensor voltage value is derived from the series connection of the sensor (35) and a resistor (38), the magnitude of which value is a measure for the magnitude of the flow velocity of the air.

8. Pneumatic seed drill or pneumatic fertilizer spreader as claimed in claim 7, characterized in that there is provided a circuit including a plurality of sensors (35), in which circuit the average of the sensor voltage values is determined and the sensor voltage values are compared separately to the average value, whereafter, when a specific sensor voltage value relative to the average is exceeded, indicator means become operative.

9. Pneumatic seed drill or pneumatic fertilizer spreader as claimed in claim 7, characterized in that there is provided a circuit including a microprocessor (56) and a plurality of sensors (35), the microprocessor (56) having a memory in which scale factors ($f_i$), determined in the microprocessor (56) from the average voltage value ($\overline{V}_o$) of the sensor voltage values ($V_{io}$) read at an initial moment in accordance with the relation $f_i = \overline{V}_o/V_{io}$ , are registered for each of the sensors, in which microprocessor (56) furthermore the average voltage value ($\overline{V}$) of the product of the each time read sensor voltage values ($V_i$) and the relevant scale factors ($f_i$) is determined, whereafter, when the product ($f_iV_i$) of a sensor voltage value ($V_i$) and the relevant scale factor ($f_i$) exceeds the average value ($\overline{V}$) by at least a threshold value (d) registered in the memory, the microprocessor (56) gives a control signal to actuate indicator means.

10. Pneumatic seed drill or pneumatic fertilizer spreader as claimed in claim 9, characterized in that the circuit comprises a multiplexer (58) and an analog/digital converter (59) connected thereto, via which the sensor voltage values are supplied to the microprocessor (56).

11. Pneumatic seed drill or pneumatic fertilizer spreader as claimed in claim 8 or 9, characterized in that the indicator means comprise a sound generator (62).

12. Pneumatic seed drill or pneumatic fertilizer spreader as claimed in any one of the preceding claims, characterized in that there is provided an operating panel (57) comprising indicator means for the degree of flow of the air, which operating panel (57) can be moved relative to the other part of the machine and can be arranged inside the cab of a tractor hauling the machine.

13. Pneumatic seed drill or pneumatic fertilizer spreader as claimed in claim 12, characterized in that, with the exception of the sensors, the circuit inclusive of the indicator means is arranged inside the operating panel (57) and is fed by the power source of the tractor.

14. Pneumatic seed drill or pneumatic fertilizer spreader as claimed in claim 12 or 13, characterized in that the indicator means for the degree of air flow comprise an indicator light or LED for each conveyor duct (22), by means of which can be rendered visible that the flow through a certain conveyor duct (22) has fallen below a specific value, or a display whereon can be rendered visible that the air flow has fallen below a specific value in respect of any number of the conveyor ducts (22), while indicating same.

15. Pneumatic seed drill or pneumatic fertilizer spreader as claimed in claim 12, 13 or 14, characterized in that the operating panel of the machine comprises a reset switch, by means of which the starting of the establishment of the scale factors in the microprocessor (56) is effected.

16. Pneumatic seed drill or pneumatic fertilizer spreader as claimed in any one of the preceding claims, characterized in that there are provided a sensor (72) and associated indicator means, by means of which can be indicated the drop-out of the air flow in the entire machine.

17. Pneumatic seed drill or pneumatic fertilizer spreader as claimed in any one of the preceding claims, characterized in that there are provided a sensor (70) and associated indicator means, by means of which can be indicated the emptying of the discharge position for the material to be distributed.

18. Pneumatic seed drill or pneumatic fertilizer spreader as claimed in any one of the preceding claims, characterized in that there are provided a sensor (71) and indicator means, by means of which can be indicated that a stepper wheel (24) controlling the doser device (13) for the material to be distributed has become inactive.

19. Pneumatic seed drill or pneumatic fertilizer spreader as claimed in any one of the preceding claims, wherein the machine is a pneumatic seed drill, characterized in that the machine comprises a distribution member (15) via which the air flow and the material to be distributed are passed to the separate conveyor ducts (22), as well as valves for blocking the connection between the distribution member (15) and specific conveyor ducts (22) with the object of creating tracks, and markers (66) for indicating changes in the direction of operative travel of the seed drill, while the microprocessor (56), responding to control signals from the operating panel (57), which signals indicate the working width of the seed drill, the working width of a spreading or spraying machine to be moved over the tracks afterwards, the drive pattern of the seed drill at an even sowing rhythm and, if desired, the valves for closing the relevant conveyor ducts (22), as well as responding to the signals issued by the markers (66), effects the closing of the relevant valves.

**Patentansprüche**

1. Pneumatische Drillmaschine oder pneumatischer Düngerstreuer zum Verteilen von Gut, das mittels eines Luftstromes über mindestens eine Förderleitung von einer Zuführlage in eine Ausbringlage zu befördern ist, dadurch gekennzeichnet, dass in dem Luftstrom mindestens ein Sensor (35) zur Strömungsmessung des Luftstromes angeordnet ist.

2. Pneumatische Drillmaschine oder pneumatischer Düngerstreuer nach Anspruch 1, dadurch gekennzeichnet, dass in mindestens einer Förderleitung (22) ein Sensor (35) angeordnet ist.

3. Pneumatische Drillmaschine oder pneumatischer Düngerstreuer nach Anspruch 1 oder 2, dadurch gekennzeichnet, dass der Sensor (35) in einen Halter (34) eingepasst ist, der in der Wand der Förderleitung derart angeordnet ist, dass zwischen dem Sensor (35) und dem Luftstrom eine Wärmeübertragung möglich ist.

4. Pneumatische Drillmaschine oder pneumatischer Düngerstreuer nach Anspruch 3, dadurch gekennzeichnet, dass der Sensor (35) zumindest teilweise über den Halter (34) hinaus in die Förderleitung (22) hineinragt.

5. Pneumatische Drillmaschine oder pneumatischer Düngerstreuer nach Anspruch 3, dadurch gekennzeichnet, dass der Sensor (35) in einer Vertiefung angeordnet ist, die teilweise durch den Halter (34) gebildet ist und in der Förderleitung endet.

6. Pneumatische Drillmaschine oder pneumatischer Düngerstreuer nach einem der vorhergehenden Ansprüche, dadurch gekennzeichnet, dass der Sensor (35) einen Thermistor (PTC- oder NTC-Widerstand) aufweist.

7. Pneumatische Drillmaschine oder pneumatischer Düngerstreuer nach Anspruch 6, dadurch gekennzeichnet, dass von der Serienschaltung des Sensors (35) und eines Widerstandes (38) ein Sensorspannungswert abgezweigt ist, dessen Grösse ein Mass für die Grösse der Durchflussgeschwindigkeit der Luft ist.

8. Pneumatische Drillmaschine oder pneumatischer Düngerstreuer nach Anspruch 7, dadurch gekennzeichnet, dass ein Schaltkreis mit mehreren Sensoren (35) vorgesehen ist, in welchem der Mittelwert der Sensorspannung ermittelt wird und die Sensorspannungswerte separat mit dem Mittelwert verglichen werden, worauf bei Überschreiten eines bestimmten Sensorspannungswertes relativ zu dem Mittelwert eine Anzeigevorrichtung aktiviert wird.

9. Pneumatische Drillmaschine oder pneumatischer Düngerstreuer nach Anspruch 7, dadurch gekennzeichnet, dass ein Schaltkreis mit einem Mikroprozessor (56) und mehreren Sensoren (35) vorgesehen ist, wobei der Mikroprozessor (56) einen Speicher aufweist, in welchem Teilungsfaktoren $(f_i)$, die in dem Mikroprozessor (56) anhand des Mittelwertes der Spannung $(\overline{V}_o)$ aus den zu einem Ausgangszeitpunkt abgelesenen Sensorspannungswerten $(V_{io})$ nach der Gleichung $f_i = \overline{V}_o/V_{io}$ bestimmt werden, für jeden Sensor registriert werden, und wobei in dem Mikroprozessor (56) ferner der Mittelwert der Spannung $(\overline{V})$ des Produktes aus den jeweils abgelesenen Sensorspannungswerten $(V_i)$ und den zugehörigen Teilungsfaktoren $(f_i)$ bestimmt wird, worauf der Mikroprozessor (56) ein Steuersignal zur Aktivierung der Anzeigevorrichtung liefert, wenn das Produkt $(f_i \ V_i)$ aus einem Sensorspannungswert $(V_i)$ und dem zugehörigen Teilungsfaktor $(f_i)$ den Mittelwert $(\overline{V})$ um mindestens

einen in dem Speicher registrierten Grenzwert (d) übersteigt.

10. Pneumatische Drillmaschine oder pneumatischer Düngerstreuer nach Anspruch 9, dadurch gekennzeichnet, dass der Schaltkreis einen Multiplexer (58) und einen mit diesem verbundenen Analog-Digital-Konverter (59) aufweist. über welchen die Sensorspannungswerte dem Mikroprozessor (56) zugeführt werden.

11. Pneumatische Drillmaschine oder pneumatischer Düngerstreuer nach Anspruch 8 oder 9, dadurch gekennzeichnet, dass die Anzeigevorrichtung einen Tongenerator (62) aufweist.

12. Pneumatische Drillmaschine oder pneumatischer Düngergstreuer nach einem der vorhergehenden Ansprüche, dadurch gekennzeichnet, dass ein Schaltpult (57) mit einer Anzeigevorrichtung für die Durchflussleistung der Luft vorgesehen ist, das relativ zu dem übrigen Teil der Maschine zu bewegen und im Fahrerhaus eines die Maschine ziehenden Schleppers anzuordnen ist.

13. Pneumatische Drillmaschine oder pneumatischer Düngerstreuer nach Anspruch 12, dadurch gekennzeichnet, dass mit Ausnahme der Sensoren der Schaltkreis einschliesslich der Anzeigevorrichtung innerhalb des Schaltpultes (57) angeordnet ist und von der Stromquelle des Schleppers versorgt wird.

14. Pneumatische Drillmaschine oder pneumatischer Düngerstreuer nach Anspruch 12 oder 13, dadurch gekennzeichnet, dass die Anzeigevorrichtung für die Luftströmung eine Leuchtanzeige oder LED für jede Förderleitung (22) aufweist, mittels der sichtbar zu machen ist, dass die Strömung in einer bestimmten Förderleitung (22) einen bestimmten Wert unterschritten hat, oder ein Display, auf dem sichtbar zu machen ist, dass die Luftströmung einen bestimmten Wert in bezug auf mehrere Förderleitungen (22) unterschritten hat, wobei diese Leitungen angezeigt werden.

15. Pneumatische Drillmaschine oder pneumatischer Düngerstreuer nach Anspruch 12, 13 oder 14, dadurch gekennzeichnet, dass das Schaltpult der Maschine einen Rückstellschalter aufweist, mittels dessen der Vorgang der Ermittlung der Teilungsfaktoren in dem Mikroprozessor (56) gestartet wird.

16. Pneumatische Drillmaschine oder pneumatischer Düngerstreuer nach einem der vorhergehenden Ansprüche, dadurch gekennzeichnet, dass ein Sensor (72) mit zugehöriger Anzeigevorrichtung vorgesehen ist, mittels der der Abfall des Luftstromes in der gesamten Maschine anzuzeigen ist.

17. Pneumatische Drillmaschine oder pneumatischer Düngerstreuer nach einem der vorhergehenden Ansprüche, dadurch gekennzeichnet, dass ein Sensor (70) mit zugehöriger Anzeigevorrichtung vorgesehen ist, mittels der für das zu verteilende Gut die Abnahme der Gutmenge in der Ausbringlage anzuzeigen ist.

18. Pneumatische Drillmaschine oder pneumatischer Düngerstreuer nach einem der vorhergehenden Ansprüche, dadurch gekennzeichnet, dass ein Sensor (71) mit einer Anzeigevorrichtung vorgesehen ist, mittels der anzuzeigen ist, dass ein Schaltrad (24) zum Steuern des Dosierers (13) für das zu verteilende Gut für den Betrieb ausgefallen ist.

19. Pneumatische Drillmaschine oder pneumatischer Düngerstreuer nach einem der vorhergehenden Ansprüche, wobei die Maschine eine pneumatische Drillmaschine ist, dadurch gekennzeichnet, dass die Maschine einen Verteiler (15) aufweist, über den der Luftstrom und das zu verteilende Gut zu den separaten Förderleitungen (22) geleitet wird, sowie Ventile zum Blockieren der Verbindung zwischen dem Verteiler (15) und bestimmten Förderleitungen (22) zum Zwecke des Anlegens von Spuren, und Spurreisser (66), um Änderungen der Arbeitsrichtung der Drillmaschine anzuzeigen, wobei der Mikroprozessor (56) als Reaktion auf Steuersignale vom Schaltpult (57), die die Arbeitsbreite der Drillmaschine, die Arbeitsbreite eines anschliessend über die Spur zu ziehenden Streuers oder Sprühers und die Fahrtroute der Drillmaschine bei gleichmässigem Särhythmus anzeigen und, falls gewünscht, die Ventile zum Verschliessen der jeweiligen Förderleitungen (22) bezeichnen, sowie als Reaktion auf die von den Spurreissern (66) gelieferten Signale das Schliessen der entsprechenden Ventile veranlasst.

**Revendications**

1. Semoir pneumatique ou épandeur pneumatique d'engrais pour distribuer de la matière destinée à être transportée par circulation d'air dans au moins un tube transporteur allant d'un poste d'alimentation à un poste de décharge, caractérisé en ce qu'au moins un capteur (35) est disposé dans la circulation d'air pour établir le degré de cette circulation.

2. Semoir pneumatique ou épandeur pneumatique d'engrais selon la revendication 1, caractérisé en ce qu'un capteur (35) est disposé dans au moins un tube transporteur (22).

3. Semoir pneumatique ou épandeur pneumatique d'engrais selon la revendication 1 ou 2, caractérisé en ce que le capteur (35) est ajusté dans une monture (34) disposée dans la paroi du tube transporteur, de telle manière qu'un transfert de chaleur puisse avoir lieu entre le capteur (35) et la circulation d'air.

4. Semoir pneumatique ou épandeur pneumatique d'engrais selon la revendication 3, caractérisé en ce que le capteur (35) s'étend au moins partiellement au delà de sa monture (34) dans le tube transporteur (22).

5. Semoir pneumatique ou épandeur pneumatique d'engrais selon la revendication 3, caractérisé en ce que le capteur (35) est situé dans une cavité qui est partiellement confiné par la monture (34) et qui s'ouvre dans le tube transporteur.

6. Semoir pneumatique ou épandeur pneumatique d'engrais selon l'une quelconque des revendications précédentes, caractérisé en ce que le capteur (35) comprend une thermistance (résistance PTC ou NTC, à coefficient de température positif ou négatif).

7. Semoir pneumatique ou épandeur pneumatique d'engrais selon la revendication 6, caractérisé en ce qu'une valeur de tension de capteur est dérivée du montage en série du capteur (35) et d'une résistance (38), la grandeur de cette valeur étant une mesure de la grandeur de la vitesse de circulation de l'air.

8. Semoir pneumatique ou épandeur pneumatique d'engrais selon la revendication 7, caractérisé en ce qu'il est prévu un circuit comprenant une pluralité de capteurs (35), dans lequel circuit est déterminée la moyenne des valeurs de tension des capteurs, et les valeurs de tension des capteurs sont comparées séparément à la valeur moyenne, après quoi, quand une valeur spécifique de tension de capteur par rapport à la moyenne est dépassée, des moyens indicateurs sont mis en action.

9. Semoir pneumatique ou épandeur pneumatique d'engrais selon la revendication 7, caractérisé en ce qu'il est prévu un circuit comprenant un micro-processeur (56) et une pluralité de capteurs (35), le micro-processeur (56) ayant une mémoire dans laquelle des facteurs d'échelle ($f_i$) déterminés dans le micro-processeur (56) d'après la valeur moyenne de tension ($\overline{V}_o$) des valeurs de tension de capteurs ($V_{io}$) relevées à un moment initial conformément à la relation $f_i = \overline{V}_o/V_{io}$ sont enregistrés pour chacun des capteurs, dans lequel micro-processeur (56) est en outre déterminée la valeur moyenne de tension ($\overline{V}$) du produit de chacune des valeurs de tension ($V_i$) de capteur, relevées au cours du temps, et des facteurs d'échelle ($f_i$) pertinents, après quoi, quand le produit ($f_iV_i$) d'une valeur de tension de capteur ($V_i$) et du facteur d'échelle ($f_i$) pertinent dépasse la valeur moyenne ($\overline{V}$) d'au moins une valeur de seuil (d) enregistrée dans la mémoire, le micro-processeur (56) émet un signal de commande pour actionner des moyens indicateurs.

10. Semoir pneumatique ou épandeur pneumatique d'engrais selon la revendication 9, caractérisé en ce que le circuit comprend un multiplexeur (58) et un convertisseur analogue/numérique (59) relié à celui-ci, par l'intermédiaire duquel les valeurs de tension des capteurs sont transmises au micro-processeur (56).

11. Semoir pneumatique ou épandeur pneumatique d'engrais selon la revendication 8 ou 9, caractérisé en ce que les moyens indicateurs comprennent un générateur de son (62).

12. Semoir pneumatique ou épandeur pneumatique d'engrais selon l'une quelconque des revendications précédentes, caractérisé en ce qu'il est prévu un tableau d'opération (57) comprenant des moyens indicateurs pour le degré de circulation de l'air, lequel tableau d'opération (57) peut être déplacé par rapport aux autres parties de la machine et peut être disposé dans la cabine d'un tracteur tractant la machine.

13. Semoir pneumatique ou épandeur pneumatique d'engrais selon la revendication 12, caractérisé en ce que, à l'exception des capteurs, le circuit, y compris les moyens indicateurs, est disposé dans le tableau d'opération (57) et est alimenté par la source d'énergie du tracteur.

14. Semoir pneumatique ou épandeur pneumatique d'engrais selon la revendication 12 ou 13, caractérisé en ce que les moyens indicateurs du degré de circulation de l'air comprennent une lampe témoin ou une diode luminescente pour chaque tube transporteur (22) au moyen de laquelle peut être rendu visible le fait que le débit dans un certain tube transporteur (22) est tombé en dessous d'une valeur spécifique, ou un affichage sur lequel peut être rendu visible le fait que le débit d'air est tombé en dessous d'une valeur spécifique en ce qui concerne un nombre quelconque de tubes transporteurs (22), tout en indiquant celui-ci.

15. Semoir pneumatique ou épandeur pneumatique d'engrais selon la revendication 12, 13 ou 14, caractérisé en ce que le tableau d'opération de la machine comprend un contact de remise à zéro au moyen duquel est effectuée la mise en marche de la détermination des facteurs d'échelle dans le micro-processeur (56).

16. Semoir pneumatique ou épandeur pneumatique d'engrais selon l'une quelconque des revendications précédentes, caractérisé en ce que sont prévus un capteur (72) et des moyens indicateurs associés, au moyen desquels peut être indiquée la chute du débit d'air dans la machine entière.

17. Semoir pneumatique ou épandeur pneumatique d'engrais selon l'une quelconque des revendications précédentes, caractérisé en ce que sont prévus un capteur (70) et des moyens indicateurs associés, au moyen desquels peut être indiqué le fait que le poste de décharge de la matière à distribuer est devenu vide.

18. Semoir pneumatique ou épandeur pneumatique d'engrais selon l'une quelconque des revendications précédentes, caractérisé en ce que sont prévus un capteur (71) et des moyens indicateurs associés, au moyen desquels peut être indiqué le fait qu'une roue traceuse (24) commandant le dispositif doseur (13) pour la matière à distribuer est devenue inactive.

19. Semoir pneumatique ou épandeur pneumatique d'engrais selon l'une quelconque des revendications précédentes, dans lequel la machine est un semoir pneumatique, caractérisé en ce que la machine comprend un organe de distribution (15) par l'intermédiaire duquel le débit d'air et la matière à distribuer sont transmis aux tubes transporteurs séparés (22), ainsi que des vannes pour bloquer le passage entre l'organe de distribution (15) et des tubes transporteurs (22) spécifiques dans le but de créer des pistes, et des marqueurs (66) pour indiquer des changements dans le sens de marche du travail du semoir, tandis que le micro-processeur (56), en répondant à des signaux de commande venant du tableau d'opération (57), lesquels signaux indiquent:

- la largeur de travail du semoir,
- la largeur de travail d'une machine d'épandage ou de pulvérisation destinée à circuler ensuite sur les pistes,
- le modèle de cycle de circulation du semoir, à un rythme régulier de semis,

et, si c'est désiré, les vannes pour fermer les tubes transporteurs (22) pertinents, ainsi qu'en répondant aux signaux émis par les marqueurs (66), effectue la fermeture des vannes pertinentes.

Fig. 1

FIG.2

FIG.5

FIG.3

FIG.4

FIG.8

FIG.6

FIG. 7